# EUROPEAN PATENT APPLICATION

(11) **EP 4 280 428 A1**
(43) Date of publication of application: **22.11.2023**
(21) Application number: 21930769.1
(22) Date of filing: 17.03.2021
(51) Int. Cl.: H02K 1/27, H02K 15/03

(54) **ROTOR PUNCHING SHEET, STEP-SKEW MOTOR ROTOR, AND MOTOR**

(71) Applicant: ZHEJIANG GEELY HOLDING GROUP CO., LTD, Hangzhou, Zhejiang 310051 (CN); VIRIDI E-MOBILITY TECHNOLOGY (NINGBO) CO., LTD., Ningbo, Zhejiang 315336 (CN)
(72) Inventor: XU, Haojie, Hangzhou, Zhejiang 310051 (CN); RUAN, Ou, Hangzhou, Zhejiang 310051 (CN); ZHAO, Qianjian, Hangzhou, Zhejiang 310051 (CN); LU, Jun, Hangzhou, Zhejiang 310051 (CN); MAO, Weina, Hangzhou, Zhejiang 310051 (CN)
(74) Representative: Range, Christopher William
(86) International application number: PCT/CN2021/081317
(87) International publication number: WO 2022/193175

(57) **Abstract**

Provided are a rotor lamination, a segmented skewed-pole motor rotor, and a motor. The rotor lamination includes: a body; an even number of magnetic steel fixing grooves; a plurality of magnets forming a plurality of magnetic pole center lines; at least three first positioning through holes, each of the at least three first positioning through holes having a diameter of d₁, in which two of the at least three first positioning through holes are located on a first magnetic pole center line, and another one of the at least three first positioning through holes is located on a second magnetic pole center line, and in which the first magnetic pole center line and the second magnetic pole center line are two magnetic pole center lines with different polarities; and at least three second positioning through holes, each of the at least three second positioning through holes having a diameter of d₂, where d₂<d₁, in which two of the at least three second positioning through holes are arranged on a first deviation line and a second deviation line, respectively, and the first deviation line and the second deviation line are located at two sides of a third magnetic pole center line respectively, and another one of the at least three second positioning through holes is located on a fourth magnetic pole center line. According to the scheme of the present disclosure, a segmented skewed-pole of the rotor can be realized by using the rotor laminations manufactured by a same mold without rotating iron cores.

## Description

### FIELD

The present disclosure relates to the field of motor technologies, and in particular, to a rotor lamination, a segmented skewed-pole motor rotor, and a motor.

### BACKGROUND

A permanent magnet synchronous motor can greatly improve power density and efficiency of the motor when applied in the field of servo motors. However, due to the influence of cogging and a non-sinusoidal magnetic field, the permanent magnet synchronous motor typically has large teeth harmonic electromotive force, cogging torque, and torque ripple, which greatly affects control precision of the motor, and thus restricts an application of the motor in a high-quality servo system.

In order to improve the control precision of the motor, a skewed-groove stator and a skewed-pole rotor are usually used. Moreover, the skewed-pole rotor is substantially divided into a continuous skewed-pole rotor and a segmented skewed-pole rotor. Compared with the continuous skewed-pole rotor, the segmented skewed-pole rotor has better teeth harmonic electromotive force, various sub-harmonics, and an effect of wakening the cogging torque. In addition, the segmented skewed-pole rotor is beneficial to lowering processing and production costs of magnetic steel, and thus is suitable for mass production. As a result, the segmented skewed-pole rotor has attracted much attention.

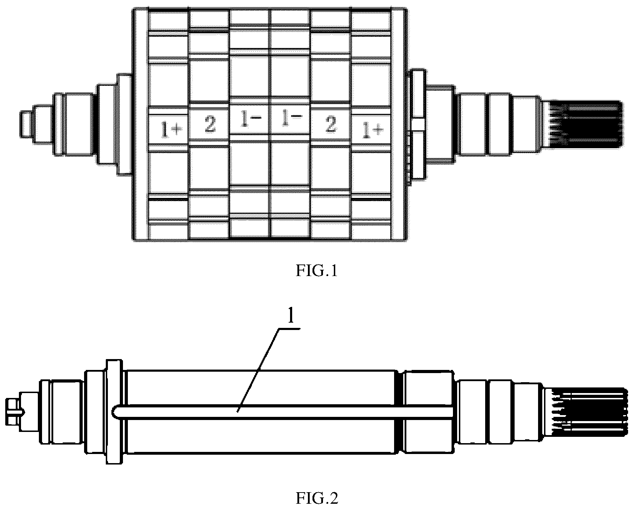

In order to obtain a segmented skewed-pole rotor core, a plurality of molds is generally employed to process the rotor core to obtain rotor cores with different angles, thereby realizing a skewed-pole structure of the rotor. As illustrated in FIG. 1, the motor rotor includes six rotor cores manufactured by two molds. Specifically, a rotor core 1+ and a rotor core 1- are manufactured by the same mold and have a difference in that the rotor core 1+ and the rotor core 1- are rotated by 180 degrees relative to each other, and the rotor core 2 is manufactured by another one of the two molds. When the rotor cores are laminated with each other to form the motor rotor, a difference between a skewed-pole angle of the rotor core 1+ and a skewed-pole angle of the rotor core 1- is 2α, and a difference between the skewed-pole angle of the rotor core 1+ and a skewed-pole angle of the rotor core 2 is α. As illustrated in FIG. 2, symmetrical key grooves are arranged on a rotary shaft, and each of the iron cores is inserted into the rotary shaft in the manner illustrated in FIG. 1 to achieve a segmented skewed-pole.

In the above method, two molds are designed to fabricate the two rotor cores as described above, and the rotor core 1+ and the rotor core 1- are rotated by 180 degrees relative to each other. When the rotor cores are laminated with each other, gaps trend to be easily generated between the rotor cores. This is because burr surfaces are orientated on same sides of the iron cores, and the burr surfaces of two adjacent iron cores may abut against each other after the iron cores are rotated, which may result in the generation of the gap. Moreover, a double key groove is required to be additionally defined on the rotary shaft, thereby increasing a design difficulty and a molding cost of the rotary shaft.

### SUMMARY

In view of the above, the present disclosure is proposed to overcome or at least partially solve the above problems. To this end, the present disclosure provides a rotor lamination, a segmented skewed-pole motor rotor, and a motor.

An object of the present disclosure is to improve universality of the rotor lamination to achieve manufacturing of a rotor core of the motor rotor only by using a same rotor lamination mold.

Another object of the present disclosure is to provide a structural form that can achieve the segmented skewed-pole motor rotor.

A further object of the present disclosure is to prevent burr surfaces of the rotor cores to be orientated in a same direction when rotating the motor rotor to avoid generation of gaps during laminating the rotor cores.

A further object of the present disclosure is to simplify a processing of a rotary shaft to lower a cost of the motor.

Particularly, according to the present disclosure, there is provided a rotor lamination. The rotor lamination includes: a body; an even number of magnetic steel fixing grooves uniformly arranged on a periphery of the body; a plurality of magnets including N-pole magnets and S-pole magnets, in which the number of the N-pole magnets is same as the number of the S-pole magnets, the N-pole magnets and the S-pole magnets are alternately mounted in the magnetic steel fixing grooves to form a plurality of magnetic pole center lines composed of N-pole center lines and S-pole center lines, the number of the N-pole center lines is same as the number of the S-pole center lines, and the N-pole center lines are arranged alternately with the S-pole center lines; at least three first positioning through holes, in which each of the at least three first positioning through holes has a diameter of d₁, two of the at least three first positioning through holes are located on a first magnetic pole center line, another one of the at least three first positioning through holes is located on a second magnetic pole center line, and the first magnetic pole center line and the second magnetic pole center line are two magnetic pole center lines with different polarities among the plurality of magnetic pole center lines; and at least three second positioning through holes, in which each of the at least three second positioning through holes has a diameter of d₂, where d₂<d₁, two of the at least three second positioning through holes are arranged on a first deviation line and a second deviation line, respectively, the first deviation line and the second deviation line being straight lines through a center of the body and located at two sides of a third magnetic pole center line respectively, the third magnetic pole center line being one of the plurality of magnetic pole center lines and being different from the first magnetic pole center line and the second magnetic pole center line, and a predetermined angle formed between the first deviation line and the third magnetic pole center line being same as a predetermined angle formed between the second deviation line and the third magnetic pole center line; another one of the at least three second positioning through holes is located on a fourth magnetic pole center line, the fourth magnetic pole center line being one of the plurality of magnetic pole center lines and being different from the first magnetic pole center line and the second magnetic pole center line, and the fourth magnetic pole center line having a polarity opposite to a polarity of the third magnetic pole center line.

Further, 2n magnetic steel fixing grooves are provided, where n is an integer greater than or equal to 4.

Further, the first magnetic pole center line, the second magnetic pole center line, the third magnetic pole center line, and the fourth magnetic pole center line are four adjacent magnetic pole center lines.

Further, the rotor lamination further includes a rotary shaft hole located at the center of the body. One of the two of the at least three first positioning through holes on the first magnetic pole center line and the other one of the at least three first positioning through holes on the second magnetic pole center line are both located on a first circle concentric with the rotary shaft hole. Another one of the two of the at least three first positioning through holes on the first magnetic pole center line is located on a second circle concentric with the rotary shaft hole, the first circle having a diameter different from the second circle.

Further, the second positioning through hole on the first deviation line and the second positioning through hole on the fourth magnetic pole center line are both located on one of the first circle and the second circle. The second positioning through hole on the second deviation line is located on another one of the first circle and the second circle.

Further, the rotor lamination further includes at least three third positioning through holes respectively corresponding to the at least three first positioning through holes. Each of the at least three third positioning through holes has a diameter of d₁ and is symmetrical about the center of the body relative to the at least three corresponding first positioning through holes. At least three fourth positioning through holes respectively correspond to the at least three second positioning through holes. Each of the at least three fourth positioning through holes has a diameter of d₂ and is symmetrical about the center of the body relative to the at least three corresponding second positioning through holes.

Further, the predetermined angle ranges from 1.5° to 5°.

Further, the rotor lamination further includes at least one lightening hole. Each of the at least one lightening hole is located on one of the plurality of magnetic pole center lines. The lightening hole is shaped different from the first positioning through hole and/or the second positioning through hole, the lightening hole is sized different from the first positioning through hole and/or the second positioning through hole, or the lightening hole is shaped and sized different from the first positioning through hole and/or the second positioning through hole.

Further, the rotor lamination further includes a plurality of lightening grooves circumferentially arranged around the center of the body uniformly. Each of the plurality of lightening grooves is located between two adjacent magnetic pole center lines.

Particularly, according to the present disclosure, there is provided a segmented skewed-pole motor rotor. The segmented skewed-pole motor rotor includes a rotary shaft, and a rotor core group sleeved over the rotary shaft. The rotor core group includes a plurality of segmented skewed-pole rotor cores, and the plurality of segmented skewed-pole rotor cores is press-assembled with each other. Each of the plurality of segmented skewed-pole rotor cores is formed by laminating a plurality of rotor laminations that is same to each other. Each of the plurality of rotor laminations is the rotor lamination as described above.

Further, 2m rotor cores are provided, where m is an integer greater than or equal to 4. A mounting hole of each of the plurality of rotor cores is defined by aligning positioning through holes of the plurality of rotor laminations laminated together in the rotor core. The plurality of rotor cores of the rotor core group is sequentially divided into first iron core groups and second iron core groups. The number of the first iron core groups is same as the number of the second iron core groups. Any two adjacent rotor cores are fixed to each other by aligning mounting holes having different diameters and located at a same distance from centers of the respective rotor laminations. A first predetermined skewed-pole angle is defined between every two adjacent rotor cores in the first iron core groups. A second predetermined skewed-pole angle is defined between every two adjacent rotor cores in the second iron core groups. One of the first predetermined skewed-pole angle and the second predetermined skewed-pole angle is a positive angle, and another one of the first predetermined skewed-pole angle and the second predetermined skewed-pole angle is a negative angle. The first predetermined skewed-pole angle has a same absolute value as the second predetermined skewed-pole angle.

Further, the mounting hole includes first mounting holes corresponding to the first positioning through holes of the rotor lamination and second mounting holes corresponding to the second positioning through holes of the rotor lamination. One of the first mounting holes of one of the two adjacent rotor cores in the rotor core group is aligned with and fixed, by a fastener, to one of the second mounting holes of another one of the two adjacent rotor cores. When the first mounting hole is aligned with second first mounting hole, a distance of the first mounting hole from the center of rotor lamination is equal to a distance of the second mounting hole from the center of the rotor lamination.

Further, the fastener is of a stepped shaft shape and has a first end with a diameter of d3 and a second end with a diameter of d4, where d₄<d₃. The first end of the fastener is configured to be in an interference fit with the first mounting hole. The second end of the fastener is configured to be in an interference fit with the second mounting hole.

Further, the first end of the fastener has a length of L₁, where d₃≤L₁≤3d₃. The second end of the fastener has a length of L₂, where d₄≤L₂≤3d₄.

Further, the fastener is configured to fix the two adjacent rotor cores by inserting the first end of the fastener into the one of the first mounting holes of the one of the two adjacent rotor cores and inserting the second end of the fastener into the one of the second mounting holes of the other one of the two adjacent rotor cores.

Particularly, according to the present disclosure, there is provided a motor. The motor includes the segmented skewed-pole motor rotor as described above.

According to the embodiments of the present disclosure, a structure of the rotor lamination is reasonably designed. That is, the plurality of magnetic steel fixing grooves, the at least three first positioning through holes, and the at least three second positioning through holes are provided on the rotor lamination. Further, the first positioning through holes and the second positioning through holes are arranged at corresponding positions. Therefore, when the rotor core group is formed by the rotor laminations, different skewed-pole angles can be formed only by positioning the rotor cores through different positioning through holes. Thus, the rotor lamination has high universality, which can only use a same rotor lamination mold to manufacture the rotor core of the motor rotor, thereby simplifying a mold structure and lowering development and manufacturing cost of the mold.

Further, since the first magnetic pole center line, the second magnetic pole center line, the third magnetic pole center line, and the fourth magnetic pole center line are four adjacent magnetic pole center lines, subsequent assembly between the rotor cores in the rotor core group can be facilitated.

Further, by reasonably positioning the first positioning through holes and the second positioning through holes on two different circles, dynamic balance of the rotor laminations can be ensured.

Further, the first positioning through hole of one of the two adjacent rotor cores is aligned with the second positioning through hole of another one of the two adjacent rotor cores, and a predetermined skewed-pole angle is defined between the two adjacent rotor cores. Therefore, fixing of the rotor core and the segmented skewed-pole of the rotor can be realized without rotating the iron cores. Moreover, since the iron cores are not required to be rotated, the burr surfaces of the respective rotor cores are orientated in the same direction, thereby preventing gaps from being generated during press-assembling.

Further, no key groove is required to be defined on the rotary shaft, which greatly lowers cost of forming the key grooves.

The above description is merely an overview of the technical solutions of the present disclosure. In order to more clearly understand the technical means of the present disclosure, the technical solutions to implement them based on the disclosure of the description and to clarify and explain the above and other objects, features, and advantages of the present disclosure, specific embodiments of the present disclosure will be further described in detail.

The specific embodiments of the present disclosure will be described in detail below in conjunction with the accompanying drawings, and the above and other objects, advantages, and features of the present disclosure would become more apparent to those skilled in the art.

### BRIEF DESCRIPTION OF THE DRAWINGS

Some specific embodiments of the present disclosure will hereinafter be described in detail with reference to the accompanying drawings that are exemplary merely, rather than limiting the present disclosure. In the accompanying drawings, same or similar components or parts are denoted by same reference numerals. It should be understood by those skilled in the art that these accompanying drawings are not necessarily drawn to scale, in which:
FIG. 1 is a schematic structural view of a rotor core in the related art;
FIG. 2 is a schematic structural view of a rotary shaft in the related art;
FIG. 3 is a schematic front view of a rotor lamination according to an embodiment of the present disclosure;
FIG. 4 is a schematic exploded view of a segmented skewed-pole motor rotor according to an embodiment of the present disclosure;
FIG. 5 is a schematic structural view of an assembled segmented skewed-pole motor rotor according to an embodiment of the present disclosure; and
FIG. 6 is a schematic structural view of a fastener according to an embodiment of the present disclosure.

In the drawings:
1-key groove, 2-rotary shaft, 3-rotor lamination, 31-body, 32-rotary shaft hole, 4-first magnetic pole center line, 6-second magnetic pole center line, 5-third magnetic pole center line, 7-fourth magnetic pole center line, 8-first deviation line, 9-second deviation line, 10-magnetic steel fixing groove, 101-first magnetic steel groove, 102-second magnetic steel groove, 11-first fabrication hole, 12-second fabrication hole, 13-third fabrication hole, 14-fourth fabrication hole, 15-fifth fabrication hole, 16-sixth fabrication hole, 17-fastener, 171-first end, 172-second end, 18-first rotor core, 19-second rotor core, 20-third rotor core, 21-fourth rotor core, 22-fifth rotor core, 23-sixth rotor core, 24-seventh rotor core, 25-eighth rotor core, 26-first lightening hole, 27-second lightening hole, 28-lightening groove.

### DETAILED DESCRIPTION

Exemplary embodiments of the present disclosure will be described in more detail below with reference to the accompanying drawings. While the exemplary embodiments of the present disclosure are illustrated in the accompanying drawings, it should be understood that the present disclosure may be embodied in various forms and should not be construed as being limited to the embodiments set forth herein. Instead, these embodiments are provided for a complete and thorough understanding of the present disclosure, and can fully convey the scope of the present disclosure to those skilled in the art.

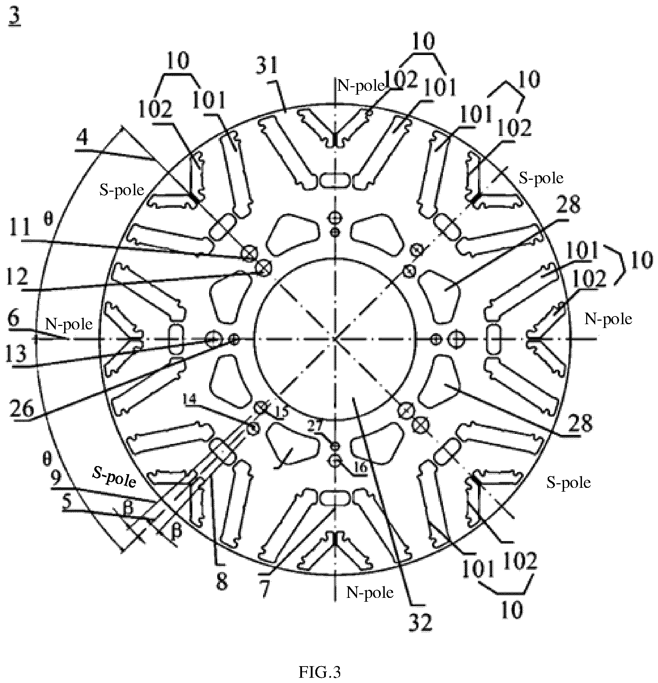

FIG. 3 is a schematic front view of a rotor lamination according to an embodiment of the present disclosure. As illustrated in FIG. 3, a rotor lamination 3 includes a body 31, an even number of magnetic steel fixing grooves 10, a plurality of magnets, at least three first positioning through holes, and at least three second positioning through holes. Each of the at least three first positioning through holes has a diameter of d₁, and each of the at least three second positioning through holes has a diameter of d₂, where d₂<d₁.

The plurality of magnetic steel fixing grooves 10 is uniformly arranged on a periphery of the body 31. The plurality of magnets includes N-pole magnets and S-pole magnets. The number of the N-pole magnets is same as the number of the S-pole magnets. The N-pole magnets and the S-pole magnets are alternately mounted in the magnetic steel fixing grooves 10 to form a plurality of magnetic pole center lines composed of N-pole center lines and S-pole center lines. The number of the N-pole center lines is same as the number of the S-pole center lines, and the N-pole center lines are arranged alternately with the S-pole center lines.

Two of the at least three first positioning through holes are located on a first magnetic pole center line 4, and another one of the at least three first positioning through holes is located on a second magnetic pole center line 6. The first magnetic pole center line 4 and the second magnetic pole center line 6 are two magnetic pole center lines with different polarities among the plurality of magnetic pole center lines. Two of the at least three second positioning through holes are arranged on a first deviation line 8 and a second deviation line 9, respectively. The first deviation line 8 and the second deviation line 9 are straight lines through a center of the body 31 and are located at two sides of a third magnetic pole center line 5, respectively. The third magnetic pole center line 5 is one of the plurality of magnetic pole center lines and is different from the first magnetic pole center line 4 and the second magnetic pole center line 6. A predetermined angle formed between the first deviation line 8 and the third magnetic pole center line 5 is same as a predetermined angle formed between the second deviation line 9 and the third magnetic pole center line 5. Another one of the at least three second positioning through holes is located on a fourth magnetic pole center line 7. The fourth magnetic pole center line 7 is one of the plurality of magnetic pole center lines and is different from the first magnetic pole center line 4 and the second magnetic pole center line 6. The fourth magnetic pole center line 7 has a polarity opposite to a polarity of the third magnetic pole center line 5.

The first deviation line 8 and the second deviation line 9 have opposite deviation directions from the third magnetic pole center line 5. As illustrated in FIG. 3, each of the first deviation line 8 and the second deviation line 9 deviates from the third magnetic pole center line 5 by a predetermined angle β ranging from 1.5° to 5°. In some embodiments, the predetermined angle β, for example, may be 1.5°, 2°, 3°, 4°, or 5°.

In a specific implementation, 2n magnetic steel fixing grooves are provided, where n is an integer greater than or equal to 4.

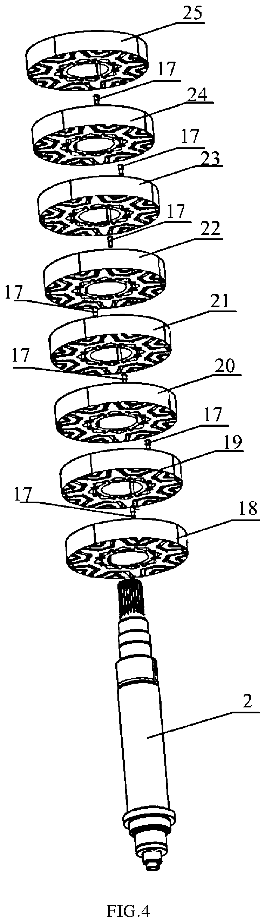

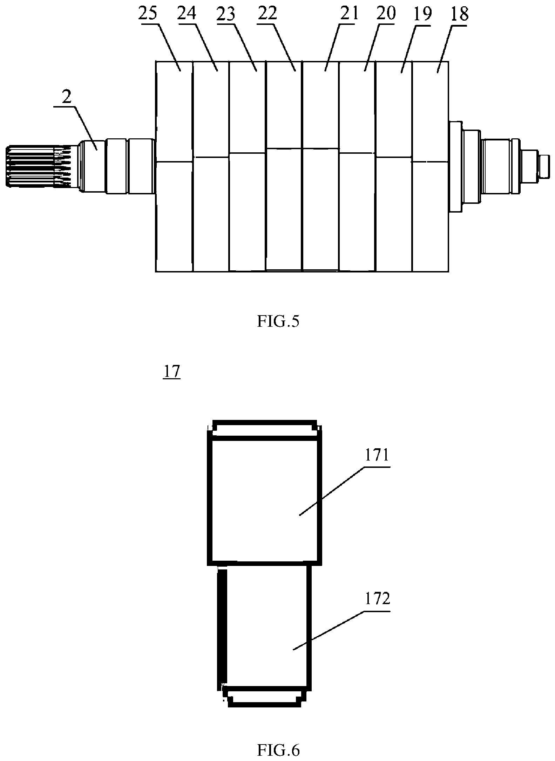

FIG. 4 is a schematic exploded view of a segmented skewed-pole motor rotor according to an embodiment of the present disclosure. FIG. 5 is a schematic structural view of a segmented skewed-pole motor rotor according to an embodiment of the present disclosure. As illustrated in FIG. 4 and FIG. 5, the motor rotor includes a rotary shaft 2 and a rotor core group sleeved over the rotary shaft 2. The rotor core group includes a plurality of rotor cores. Each of the plurality of rotor cores is formed by laminating a plurality of rotor laminations 3. 2m rotor cores in the rotor core group are provided, where m is an integer greater than or equal to 4. It should be noted that there is no correspondence between m and n.

A mounting hole of each of the rotor cores is defined by aligning positioning through holes of the plurality of rotor laminations 3 laminated together in the rotor core. The rotor cores of the rotor core group are sequentially divided into first iron core groups and second iron core groups. The number of the first iron core groups is same as the number of the second iron core groups. Any two adjacent rotor cores are fixed to each other by aligning mounting holes having different diameters and located at a same distance from centers of the respective rotor laminations. A first predetermined skewed-pole angle is defined between every two adjacent rotor cores in the first iron core groups. A second predetermined skewed-pole angle is defined between every two adjacent rotor cores in the second iron core groups. One of the first predetermined skewed-pole angle and the second predetermined skewed-pole angle is a positive angle, and another one of the first predetermined skewed-pole angle and the second predetermined skewed-pole angle is a negative angle, and the first predetermined skewed-pole angle has a same absolute value as the second predetermined skewed-pole angle. In this way, a segmented skewed-pole is formed.

The mounting hole includes first mounting holes corresponding to the first positioning through hole of the rotor lamination and second mounting holes corresponding to the second positioning through holes of the rotor lamination. One of the first mounting holes of one of the two adj acent rotor cores in the rotor core group is aligned with and fixed, by a fastener 17, to one of the second mounting holes of another one of the rotor cores. When the first mounting hole is aligned with second first mounting hole, a distance of the first mounting hole from the center of rotor lamination is equal to a distance of the second mounting hole from the center of the rotor lamination.

The present disclosure further provides a motor including the motor rotor as described above.

According to the embodiments of the present disclosure, a structure of the rotor lamination 3 is reasonably designed. That is, the plurality of magnetic steel fixing grooves 10, the at least three first positioning through holes, and the at least three second positioning through holes are provided on the rotor lamination 3. Further, the first positioning through holes and the second positioning through holes are arranged at corresponding positions. Therefore, when the rotor core group is formed by the rotor laminations 3, different skewed-pole angles can be formed only by positioning the rotor cores through different positioning through holes. Thus, the rotor lamination 3 has high universality, which can only use a same rotor lamination mold to manufacture the rotor core of the motor rotor, thereby simplifying a mold structure and lowering development and manufacturing cost of the mold.

Detailed description will be provided below by specific embodiments.

### Embodiments 1

As illustrated in FIG. 3, in a structure of the rotor lamination 3 according to the embodiments, each of the magnetic steel fixing grooves 10 is composed of a first magnetic steel groove 101 and a second magnetic steel groove 102. The first magnetic steel groove 101 has a size greater than a diameter of the second magnetic steel groove 102. A magnetic pole center line is formed between a center of a magnet (specifically magnetic steel) fixed in each of the magnetic steel fixing grooves 10 and the center of the body 31 of the rotor lamination 3, and the magnetic poles formed by two adjacent magnetic steels have opposite polarities. That is, one of the two adjacent magnetic poles is the N-pole, and the other one is the S-pole.

The first magnetic pole center line 4, the second magnetic pole center line 6, the third magnetic pole center line 5, and the fourth magnetic pole center line 7 are four adjacent magnetic pole center lines. The second magnetic pole center line 6 is locate between the first magnetic pole center line 4 and the third magnetic pole center line 5. The third magnetic pole center line 5 is locate between the second magnetic pole center line 6 and the fourth magnetic pole center line 7. Each of the first magnetic pole center line 4 and the third magnetic pole center line 5 is the S-pole center lines, and each of the second magnetic pole center line 6 and the fourth magnetic pole center line 7 is the N-pole center lines. Alternatively, each of the first magnetic pole center line 4 and the third magnetic pole center line 5 is the N-pole center lines, and each of the second magnetic pole center line 6 and the fourth magnetic pole center line 7 is the S-pole center lines.

Two of the at least three first positioning through holes are located on the first magnetic pole center line 4, and another one of the at least three first positioning through holes is located on the second magnetic pole center line 6. Two of the at least three second positioning through holes are arranged on the first deviation line 8 and the second deviation line 9, respectively. The first deviation line 8 and the second deviation line 9 are straight lines through the center of the body 31 and are located at two sides of the third magnetic pole center line 5, respectively. A predetermined angle β formed between the first deviation line 8 and the third magnetic pole center line 5 is same as a predetermined angle β formed between the second deviation line 9 and the third magnetic pole center line 5. Another one of the at least three second positioning through holes is located on the fourth magnetic pole center line 7. The angle β ranges from 1.5° to 5°. For example, the angle β may be 1.5°, 2°, 3°, 4°, or 5°.

The rotor lamination 3 includes a rotary shaft hole 32 located at the center of the body 31. The two of the first positioning through holes located on the first magnetic pole center line 4 are a first fabrication hole 11 and a second fabrication hole 12, and the one of the first positioning through holes located on the second magnetic pole center line 6 is a third fabrication hole 13. A center of the first fabrication hole 11 is located at an intersection of the first magnetic pole center line 4 with a first circle (not illustrated) concentric with the rotary shaft hole 32, and a diameter of the first circle is greater than a diameter of the rotary shaft hole 32. A center of the second fabrication hole 12 is located at an intersection of the first magnetic pole center line 4 with a second circle concentric with the rotary shaft hole 32 (not illustrated), and a diameter of the second circle is smaller than the diameter of the first circle and greater than the diameter of the rotary shaft hole 32. A center of the third fabrication hole 13 is located at an intersection of the second magnetic pole center line 6 with the first circle. The second positioning through hole located on the first deviation line 8 is a fourth fabrication hole 14. The second positioning through hole located on the second deviation line 9 is a fifth fabrication hole 15. The second positioning through hole located on the fourth magnetic pole center line 7 is a sixth fabrication hole 16. A center of the fourth fabrication hole 14 is located at an intersection of the first deviation line 8 with the first circle. A center of the fifth fabrication hole 15 is located at an intersection of the second deviation line 9 with the second circle. A center of the sixth fabrication hole 16 is located at an intersection of the fourth magnetic pole center line 7 with the first circle.

As illustrated in FIG. 4 and FIG. 5, according to the embodiments of the present disclosure, a motor rotor is further included. The motor rotor includes a rotor core group. 8 motor rotors in the rotor core group are provided, i.e., m=4, and each of the rotor cores has 8 magnetic poles, i.e., n=4. Each of the plurality of rotor cores is formed by laminating a plurality of rotor laminations 3 as described above. The rotor laminations 3 of the rotor cores in the rotor core group are manufactured by a same mold.

As illustrated in FIG. 4, any two adjacent rotor cores in the rotor core group are fixed by a fastener 17. FIG. 6 is a schematic structural view of a fastener according to Embodiment 1 of the present disclosure. The fastener 17 has a first end 171 with a diameter of d₃ and a second end 172 with a diameter of d₄, where d₄<d₃. The fastener 17 is configured such that the first end 171 of the fastener 17 is inserted into one of the first mounting holes of one of the two adjacent rotor cores, and the second end 172 of the fastener 17 is inserted into one of the second mounting holes of another one of the two adjacent rotor cores. In this way, the two adjacent rotor cores are fixed to each other.

The first end 171 of the fastener 17 has a length of L₁, where d₃≤L₁≤3d₃. The second end 172 of the fastener 17 has a length of L₂, where d₄≤L₂≤3d₄. In some embodiments, the fastener 17 may be, for example, a positioning pin.

Description will be provided below by taking skewed-poles of an eight-segment rotor core formed by eight rotor cores as an example. The eight rotor cores include a first rotor core 18, a second rotor core 19, a third rotor core 20, a fourth rotor core 21, a fifth rotor core 22, a sixth rotor core 23, a seventh rotor core 24, and an eighth rotor core 25. A specific implementation method will be described below.
1) A first end 171 of one fastener 17 is pressed into a fourth fabrication hole 14 of the first rotor core 18, and the first rotor core 18 is sleeved over the rotary shaft 2 through the interference fit.
2) A second end 172 of the fastener 17 on the first rotor core 18 is aligned with and pressed into a first fabrication hole 11 of the second rotor core 19, and the second rotor core 19 is sleeved over the rotary shaft 2. In addition, a second end 172 of another fastener 17 is pressed into a fourth fabrication hole 14 of the second rotor core 19.
3) A first end 171 of the fastener 17 on the first rotor core 19 is aligned with and pressed into a first fabrication hole 11 of the third rotor core 20, and the third rotor core 20 is sleeved over the rotary shaft 2. In addition, a second end 172 of further another fastener 17 is pressed into a fourth fabrication hole 14 of the third rotor core 20.
4) A first end 171 of the fastener 17 on the third rotor core 20 is aligned with and pressed into a first fabrication hole 11 of the fourth rotor core 21, and the fourth rotor core 21 is sleeved over the rotary shaft 2. In addition, a second end 172 of yet another fastener 17 is pressed into a sixth fabrication hole 16 of the fourth rotor core 21.
5) A first end 171 of the fastener 17 on the fourth rotor core 21 is aligned with and pressed into a third fabrication hole 13 of the fifth rotor core 22, and the fifth rotor core 22 is sleeved over the rotary shaft 2. In addition, a second end 172 of still another fastener 17 is pressed into a fifth fabrication hole 15 of the fifth rotor core 22.
6) A first end 171 of the fastener 17 on the fifth rotor core 22 is aligned with and pressed into a second fabrication hole 12 of the sixth rotor core 23, and the sixth rotor core 23 is sleeved over the rotary shaft 2. In addition, a second end 172 of another fastener 17 is pressed into a fifth fabrication hole 15 of the sixth rotor core 23.
7) A first end 171 of the fastener 17 on the sixth rotor core 13 is aligned with and pressed into a second fabrication hole 12 of the seventh rotor core 24, and the seventh rotor core 24 is sleeved over the rotary shaft 2. In addition, a second end 172 of further another fastener 17 is pressed into a fifth fabrication hole 15 of the seventh rotor core 24.
8) A first end 171 of the fastener 17 on the seventh rotor core 24 is aligned with and pressed into a second fabrication hole 12 of the eighth rotor core 25, and the eighth rotor core 25 is sleeved over the rotary shaft 2.
9) All the rotor cores are sleeved to a bottom of the rotary shaft 2 over the rotary shaft 2, enabling the rotor cores to be completely attached with each other, thereby forming the skewed-pole of the eight rotor cores.

When the rotor cores in the rotor core group are assembled together, burr surfaces of the respective rotor cores are orientated in a same direction.

According to the embodiments of the present disclosure, the first magnetic pole center line 4, the second magnetic pole center line 6, the third magnetic pole center line 5, and the fourth magnetic pole center line 7 are four adjacent magnetic pole center lines, thereby facilitating subsequent assembly between the rotor cores in the rotor core group.

Further, by reasonably positioning the first positioning through holes and the second positioning through holes on two different circles, the arrangement is more regular while achieving the segmented skewed-pole of the motor rotor, which is beneficial to dynamic balance. Thus, the structure is reasonable and attractive.

Further, the first positioning through hole of one of the two adjacent rotor cores is aligned with the second positioning through hole of another one of the two adjacent rotor cores, and a predetermined skewed-pole angle is defined between the two adjacent rotor cores. Therefore, fixing of the rotor core and the segmented skewed-pole of the rotor can be realized without rotating the iron cores. Moreover, since the iron cores are not required to be rotated, the burr surfaces of the respective rotor cores are orientated in the same direction, thereby preventing gaps from being generated during press-assembling.

Further, no key groove is required to be defined on the rotary shaft, which greatly lowers cost of forming the key grooves.

### Embodiment 2

Compared with Embodiment 1, in Embodiment 2, each of the rotor cores has eight magnetic poles, and the number of rotor cores in the rotor core group is 10, 12, 14, 16, or an even number greater than 16. Alternatively, 2n magnetic poles of each of the rotor cores are provided, where n≥5, and the number of rotor cores in the rotor core group is 10, 12, 14, 16, or an even number greater than 16.

When the rotor cores in the rotor core group are assembled together, the burr surfaces of the rotor cores are orientated in the same direction. Moreover, the first positioning through hole of one of the two adjacent rotor cores is aligned with the second mounting hole of another one of the two adjacent rotor cores. Further, the magnetic pole center lines where the aligned first positioning through holes and second positioning through holes are located or the magnetic pole center lines close to the aligned first positioning through holes and second positioning through holes are ensured to have the same polarities (which are described relative to the second positioning through holes located on the first deviation line and the second deviation line).

### Embodiment 3

Compared with Embodiment 1, in Embodiment 3, the rotor lamination 3 further includes at least one lightening hole. Each of the at least one lightening hole is located on one of the plurality of magnetic pole center lines. The lightening hole is shaped different from the first positioning through hole located on the second magnetic pole center line 6 and/or the second positioning through hole located on the fourth magnetic pole center line 7; the lightening hole is sized different from the first positioning through hole and/or the second positioning through hole; or the lightening hole is shaped and sized different from the first positioning through hole and/or the second positioning through hole. As illustrated in FIG. 3, two lightening holes including a first lightening hole 26 and a second lightening hole 27 are provided. The first lightening hole 26 is located on the second magnetic pole center line 6 and has a center located at an intersection of the second magnetic pole center line 6 with the second circle. The second lightening hole 27 is located on the fourth magnetic pole center line 7 and has a center located at an intersection of the fourth magnetic pole center line 7 with the second circle.

The first lightening hole 26 is shaped same to the third fabrication hole 13 and has a smaller size than the third fabrication hole 13. The second lightening hole 27 is shaped same to the sixth fabrication hole 16 and has a smaller size than the sixth fabrication hole 16. Alternatively, the first lightening hole 26 is shaped different from the third fabrication hole 13, and the second lightening hole 27 is shaped different from the sixth fabrication hole 16. Alternatively, the first lightening hole 26 is shaped and sized different from the third fabrication hole 13, and the second lightening hole 27 is shaped and sized different from the sixth fabrication hole 16. Therefore, the fabrication hole and the lightening hole can be obviously distinguished, thereby avoiding a mounting error during mounting of the fastener 17.

By providing the lightening holes, a weight of the rotor core can be reduced. Moreover, with the above arrangement of the first lightening hole 26 and the second lightening hole 27, it is possible to ensure symmetry and aesthetics of the rotor core while reducing the weight thereof.

### Embodiment 4

Compared with Embodiment 1 or Embodiment 3, in Embodiment 4, the rotor lamination 3 further includes a plurality of lightening grooves 28. The plurality of lightening grooves 28 is circumferentially arranged around the center of the body 31 (specifically the rotary shaft hole 32) uniformly. Each of the plurality of lightening grooves 28 is located between two adjacent magnetic pole center lines. The lightening hole 28 is shaped different from each of the fabrication holes.

By providing the lightening groove 28 is provided, the weight of the rotor core can be reduced. In addition, the plurality of lightening grooves 28 is circumferentially arranged around the center of the lamination. Therefore, the symmetry and attractiveness of the rotor iron core can be ensured while the weight of the rotor core is reduced.

### Embodiment 5

Compared with Embodiment 1, Embodiment 3, or Embodiment 4, in Embodiment 5, the rotor lamination 3 further includes at least three third positioning through holes with a diameter of d₁ corresponding to the at least three first positioning through holes with the diameter of d₁ and at least three fourth positioning through holes with a diameter of d₂ corresponding to the at least three second positioning through holes with the diameter of d₂. Each of the at least three third positioning through holes is symmetrical about the center of the body 31 relative to the at least three corresponding first positioning through holes. Each of the at least three fourth positioning through holes is symmetrical about the center of the body 31 relative to the at least three corresponding second positioning through holes. It is possible to improve dynamic balance performance of the rotor core through such symmetric design.

### Embodiment 6

Compared with Embodiment 1, in Embodiment 6, the center of the third fabrication hole 13 is located at the intersection of the second magnetic pole center line 6 with the second circle. The center of the fourth fabrication hole 14 is located at an intersection of the first deviation line 8 with the second circle. The center of the fifth fabrication hole 15 is located at an intersection of the second deviation line 9 with the first circle. The center of the sixth fabrication hole 16 is located at the intersection of the fourth magnetic pole center line 7 with the second circle.

Although exemplary embodiments of the present disclosure have been illustrated and described in detail herein, it is conceivable for those skilled in the art that various modifications and variations can be directly determined or derived based on the disclosure of the present disclosure without departing from the principles and spirits of the present disclosure. Therefore, the scope of the present disclosure shall be understood and considered to cover all these variations or modifications and other variations or modifications.

## Claims

1. A rotor lamination, comprising:
a body;
an even number of magnetic steel fixing grooves uniformly arranged on a periphery of the body;
a plurality of magnets comprising N-pole magnets and S-pole magnets, the number of the N-pole magnets being same as the number of the S-pole magnets, the N-pole magnets and the S-pole magnets being alternately mounted in the magnetic steel fixing grooves to form a plurality of magnetic pole center lines composed of N-pole center lines and S-pole center lines, the number of the N-pole center lines being same as the number of the S-pole center lines, and the N-pole center lines being arranged alternately with the S-pole center lines;
at least three first positioning through holes, each of the at least three first positioning through holes having a diameter of d₁, wherein:
two of the at least three first positioning through holes are located on a first magnetic pole center line;
another one of the at least three first positioning through holes is located on a second magnetic pole center line; and
the first magnetic pole center line and the second magnetic pole center line are two magnetic pole center lines with different polarities among the plurality of magnetic pole center lines; and
at least three second positioning through holes, each of the at least three second positioning through holes having a diameter of d₂, where d₂<d₁, wherein:
two of the at least three second positioning through holes are arranged on a first deviation line and a second deviation line, respectively, the first deviation line and the second deviation line being straight lines through a center of the body and located at two sides of a third magnetic pole center line respectively, the third magnetic pole center line being one of the plurality of magnetic pole center lines and being different from the first magnetic pole center line and the second magnetic pole center line, and a predetermined angle formed between the first deviation line and the third magnetic pole center line being same as a predetermined angle formed between the second deviation line and the third magnetic pole center line;
another one of the at least three second positioning through holes is located on a fourth magnetic pole center line, the fourth magnetic pole center line being one of the plurality of magnetic pole center lines and being different from the first magnetic pole center line and the second magnetic pole center line, and the fourth magnetic pole center line having a polarity opposite to a polarity of the third magnetic pole center line.

2. The rotor lamination according to claim 1, wherein 2n magnetic steel fixing grooves are provided, where n is an integer greater than or equal to 4.

3. The rotor lamination according to claim 2, wherein the first magnetic pole center line, the second magnetic pole center line, the third magnetic pole center line, and the fourth magnetic pole center line are four adjacent magnetic pole center lines.

4. The rotor lamination according to claim 2, further comprising a rotary shaft hole located at the center of the body, wherein:
one of the two of the at least three first positioning through holes on the first magnetic pole center line and the other one of the at least three first positioning through holes on the second magnetic pole center line are both located on a first circle concentric with the rotary shaft hole; and
another one of the two of the at least three first positioning through holes on the first magnetic pole center line is located on a second circle concentric with the rotary shaft hole, the first circle having a diameter different from the second circle.

5. The rotor lamination according to claim 4, wherein:
the second positioning through hole on the first deviation line and the second positioning through hole on the fourth magnetic pole center line are both located on one of the first circle and the second circle; and
the second positioning through hole on the second deviation line is located on another one of the first circle and the second circle.

6. The rotor lamination according to any one of claims 1 to 5, further comprising:
at least three third positioning through holes respectively corresponding to the at least three first positioning through holes, each of the at least three third positioning through holes having a diameter of d₁ and being symmetrical about the center of the body relative to the at least three corresponding first positioning through holes; and
at least three fourth positioning through holes respectively corresponding to the at least three second positioning through holes, each of the at least three fourth positioning through holes having a diameter of d₂ and being symmetrical about the center of the body relative to the at least three corresponding second positioning through holes.

7. The rotor lamination according to any one of claims 1 to 5, wherein the predetermined angle ranges from 1.5° to 5°.

8. The rotor lamination according to any one of claims 1 to 5, further comprising at least one lightening hole, each of the at least one lightening hole being located on one of the plurality of magnetic pole center lines, wherein:
the lightening hole is shaped different from the first positioning through hole and/or the second positioning through hole;
the lightening hole is sized different from the first positioning through hole and/or the second positioning through hole; or
the lightening hole is shaped and sized different from the first positioning through hole and/or the second positioning through hole.

9. The rotor lamination according to any one of claims 1 to 5, further comprising a plurality of lightening grooves circumferentially arranged around the center of the body uniformly, each of the plurality of lightening grooves being located between two adjacent magnetic pole center lines.

10. A segmented skewed-pole motor rotor, comprising:
a rotary shaft; and
a rotor core group sleeved over the rotary shaft, wherein:
the rotor core group comprises a plurality of segmented skewed-pole rotor cores, the plurality of segmented skewed-pole rotor cores being press-assembled with each other,
each of the plurality of segmented skewed-pole rotor cores is formed by laminating a plurality of rotor laminations that is same to each other, each of the plurality of rotor laminations being the rotor lamination according to any one of claims 1 to 9.

11. The segmented skewed-pole motor rotor according to claim 10, wherein
2m rotor cores are provided, where m is an integer greater than or equal to 4;
a mounting hole of each of the plurality of rotor cores is defined by aligning positioning through holes of the plurality of rotor laminations laminated together in the rotor core;
the plurality of rotor cores of the rotor core group is sequentially divided into first iron core groups and second iron core groups, wherein:
the number of the first iron core groups is same as the number of the second iron core groups;
any two adjacent rotor cores are fixed to each other by aligning mounting holes having different diameters and located at a same distance from centers of the respective rotor laminations;
a first predetermined skewed-pole angle is defined between every two adjacent rotor cores in the first iron core groups;
a second predetermined skewed-pole angle is defined between every two adjacent rotor cores in the second iron core groups; and
one of the first predetermined skewed-pole angle and the second predetermined skewed-pole angle is a positive angle, another one of the first predetermined skewed-pole angle and the second predetermined skewed-pole angle is a negative angle, and the first predetermined skewed-pole angle has a same absolute value as the second predetermined skewed-pole angle.

12. The segmented skewed-pole motor rotor according to claim 11, wherein:
the mounting hole comprises first mounting holes corresponding to the first positioning through holes of the rotor lamination and second mounting holes corresponding to the second positioning through holes of the rotor lamination;
one of the first mounting holes of one of the two adjacent rotor cores in the rotor core group is aligned with and fixed, by a fastener, to one of the second mounting holes of another one of the two adjacent rotor cores; and
when the first mounting hole is aligned with second first mounting hole, a distance of the first mounting hole from the center of rotor lamination is equal to a distance of the second mounting hole from the center of the rotor lamination.

13. The segmented skewed-pole motor rotor according to claim 12, wherein:
the fastener is of a stepped shaft shape and has a first end with a diameter of d₃ and a second end with a diameter of d₄, where d₄<d₃;
the first end of the fastener is configured to be in an interference fit with the first mounting hole; and
the second end of the fastener is configured to be in an interference fit with the second mounting hole.

14. The segmented skewed-pole motor rotor according to claim 13, wherein:
the first end of the fastener has a length of L₁, where d₃≤L₁≤3d₃; and
the second end of the fastener has a length of L₂, where d₄≤L₂≤3d₄.

15. The motor rotor according to claim 13 or 14, wherein the fastener is configured to fix the two adjacent rotor cores by inserting the first end of the fastener into the one of the first mounting holes of the one of the two adjacent rotor cores and inserting the second end of the fastener into the one of the second mounting holes of the other one of the two adjacent rotor cores.

16. A motor, comprising the segmented skewed-pole motor rotor according to any one of claims 10 to 15.
